# EUROPEAN PATENT APPLICATION

(11) **EP 4 636 729 A1**
(43) Date of publication of application: **22.10.2025**
(21) Application number: 25168850.3
(22) Date of filing: 07.04.2025
(51) Int. Cl.: G08G 1/0967, B60W 40/09, G07C 5/00, H04W 4/44

(54) **SYSTEMS AND METHODS FOR VEHICLE BEHAVIOR MONITORING AND QUANTIFICATION**

(30) Priority: 19.04.2024 US 202418641239
(71) Applicant: Harman International Industries, Inc., Stamford, Connecticut 06901 (US)
(72) Inventor: Yatagiri, Maria, Praveen, Kumar, Cupertino, CA, 95014 (US); Reddy, Sridhar, Vellenki, 560024 Bangalore (IN); Dey, Sumit, Ann Arbor, MI, 48103 (US); Nakanishi, Toshiyuki, Wixom, MI, 48393 (US)
(74) Representative: Kraus & Lederer PartGmbB

(57) **Abstract**

The disclosure herein pertains to monitoring and quantifying vehicle drive behavior using an edge computing device. In one example, a method may include receiving vehicle data from a vehicle; receiving remote vehicle data from a remote vehicle; receiving road user data from a road user; receiving road infrastructure data from a road infrastructure device; calculating a vehicle behavior score of the vehicle using vehicle data and one or more of remote vehicle data, road user data, and road infrastructure data; and outputting and storing the vehicle behavior score.

## Description

### FIELD

The disclosure relates to methods and apparatuses for a vehicle system and, in particular, monitoring and quantification of vehicle behavior of a vehicle, and/or operator behavior of an operator of the vehicle, using an edge computing device.

### BACKGROUND

Edge computing is a distributed computing model that brings computations and data storage closer to the sources of data. Edge computing architectures are implemented in road infrastructure environments to provide low-latency data transfer, and thus faster communication, among elements of the road infrastructure environment. Vehicles, infrastructure elements such as traffic signals, and user devices in the road infrastructure environment communicate with an edge computing device to send and receive data about operation of each element. The edge computing device may be further coupled to a cellular base station for communication with elements outside the road infrastructure environment.

A vehicle that is equipped with edge computing access has access to historic and real-time information regarding driving behaviors of the vehicle. Both user-driven vehicles and autonomous vehicles may be equipped with edge computing access. Driving behaviors include information about how the user and/or the autonomous vehicle drives the vehicle itself, as well as information about how the vehicle interacts with other elements of the road infrastructure environment that are in proximity to the vehicle. Driving behavior information may be used to generate a vehicle behavior score that may be used to incentivize drivers, such as through score cards and insurance discounts. Typically, these methods use vehicle sensors and/or databases of information to compare speed limits, traffic signals, and so on to driving behavior of the vehicle. However, driving is dynamic in nature and is relative to a situation/environment including other road users and road elements. Therefore, driving scores are a function of other real time events as well as vehicle behavior.

Conventional methods for monitoring and quantifying (e.g., scoring) driver behavior include monitoring ways the user drives the vehicle, such as sudden acceleration, hard brakes, and sharp turns. This monitoring may be performed using data from the vehicle. However, this may be an insufficient and non-robust view of driving behavior, and may exclude some elements that a human user may attribute to driving behavior. "True" driving behavior may also be defined by how the vehicle interacts with other vehicles and elements of the road infrastructure environment. Some disadvantages of conventional solutions include that the drive score is indirectly focused on the drive behavior impact on the environment and reflects a vehicle condition (e.g., degradation of brakes, etc.). Conventional methods for calculating drive score also do not consider adverse behavior with respect to other road users.

### SUMMARY

Described herein are systems and methods for monitoring and quantifying vehicle drive behaviors. The systems and methods described herein use edge computing to analyze behavior of a vehicle, including interactions and behaviors with respect to other vehicles, road users, and road infrastructure devices. In one or more embodiments, a method for an edge computing device comprises: receiving vehicle data from a vehicle; receiving remote vehicle data from a remote vehicle; receiving road user data from a road user; receiving road infrastructure data from a road infrastructure device; calculating a vehicle behavior score of the vehicle using vehicle data and one or more of remote vehicle data, road user data, and road infrastructure data; and outputting the vehicle behavior score to the vehicle. The method for the edge computing device may further include comparing the vehicle behavior score for the vehicle to a minimum vehicle score threshold and, in response to the vehicle behavior score being less than the minimum vehicle score threshold, generating and outputting one or more vehicle control signals corresponding to a driving score identified as being less than a corresponding minimum threshold driving score.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIG. 1 shows a partial view of a cabin of a vehicle;
FIG. 2 shows a block diagram of an in-vehicle computing system of the vehicle of FIG. 1;
FIG. 3 shows a block diagram of an edge computing architecture, including an edge computing device and the vehicle of FIGS. 1-2;
FIGS. 4A and 4B show a method for an edge computing device for calculating a vehicle behavior score, in accordance with one or more embodiments of the present disclosure; and
FIG. 5 shows a method for a vehicle system for adjusting operation of the vehicle system in response to receiving a vehicle behavior score calculated by the edge computing device, in accordance with one or more embodiments of the present disclosure.

### DETAILED DESCRIPTION

The following description relates to systems and methods for vehicle behavior monitoring and quantification and in particular, for calculating a vehicle behavior score of the vehicle, where the vehicle behavior score quantifies actions of the vehicle and interactions of the vehicle with other elements of an edge computing architecture, including one or more remote vehicles, road users, and road infrastructure devices. In some examples, the method further includes generating and outputting one or more vehicle control signals from the edge computing device to the vehicle in response to the vehicle behavior score being less than a minimum threshold vehicle behavior score. In this way, behavior of the vehicle may be automatically adjusted in response to actions of the vehicle and how the actions are scored (e.g., as being desirable actions or undesirable actions). In further examples, the vehicle behavior score may be associated with an operator of the vehicle. The vehicle behavior score in this example may be referred to as an operator behavior score, and the operator behavior score is associated with the operator while they are operating different vehicles.

The edge computing device is used as a low latency operator. For example, latency of receiving vehicle data, remote vehicle data, road user data, and road infrastructure data; calculating a vehicle behavior score using received data; and outputting the vehicle behavior score may be up to 30 milliseconds (ms). This is desirable compared to cloud operations, which may include latency of 200 ms or more. Elements that may be used to assess vehicle behavior and calculate the vehicle behavior score include behaviors of both the vehicle and other elements (e.g., the road user, the remote vehicle, the road infrastructure device) that may change throughout a trip of the vehicle. As these behaviors change, transmission of data to a cloud and back to the vehicle may generate high data traffic and processing demand. Alternatively, using the edge computing device may decrease latency and processing demand. Additionally, the edge computing device may store data and/or use received data to calculate driving scores that are used to calculate the vehicle behavior score following completion of the trip of the vehicle. In this way, vehicle behaviors and events that occur simultaneously and/or at different times throughout the duration of the trip of the vehicle may be used to calculate the vehicle behavior score.

Latency and processing demands are further addressed using the methods herein by calculating the vehicle driving score for a vehicle in a stepwise operation during and/or at an end of a trip of the vehicle. Vehicle data, road user data, remote vehicle data, and road infrastructure data may be continuously and simultaneously received by the edge computing device during operation of each element in an edge computing architecture. For example, one or more road users and remote vehicles may continuously send respective data to the edge computing device when communicably coupled to the edge computing device (e.g., when within a communicable range of the edge computing device). The road infrastructure device may continuously send data to the edge computing device when the road infrastructure device is operational (e.g., receiving power and communicably coupled to the edge computing device). Using the received data, the edge computing device may identify vehicle events and events of vehicle interaction with one or more road users, road infrastructure devices, and remote vehicles in real time or near-real time during the trip of the vehicle. Identifying vehicle events and events of vehicle interaction may include selecting, flagging, or otherwise noting data to be used to calculation of the vehicle behavior score. Vehicle data, remote vehicle data, road user data, and road infrastructure data that is determined to not be related to vehicle events and/or events of vehicle interaction may not be stored by the edge computing device for the purposes of executing the methods for quantifying vehicle behavior described herein. This may reduce latency, as well as reduce processing demand and storage demand on the edge computing device.

Calculating the vehicle behavior score in a stepwise process further includes calculating a driving score for the vehicle and a driving score for each vehicle-element interaction (e.g., vehicle-remote vehicle interaction, vehicle-road user interaction, vehicle-road infrastructure device interaction) as relevant data is received. This may decrease a processing demand by distributing the calculations into multiple calculations that retrieve and use relevant data (e.g., respective to an interacting element), rather than compiling all received data using a single calculation. The vehicle behavior score is calculated from the driving scores when the trip of the vehicle ends. As data used to calculate the vehicle behavior score is organized in this stepwise manner (e.g., vehicle events and/or events of vehicle interactions used to calculate driving scores, driving scores used to calculate the vehicle behavior score), generating and outputting one or more vehicle control signals that are configured to control vehicle behaviors that contribute to the vehicle events may be faster than parsing through all road user data, vehicle data, remote vehicle data, and road infrastructure data used to calculate the vehicle behavior score. This may further decrease a time to adjust vehicle behavior in response to determining the vehicle behavior score is less than a minimum vehicle score threshold. One or more behaviors to be adjusted may be quickly identified by identifying driving scores with values that are less than a corresponding minimum threshold driving score, and vehicle events and/or events of vehicle interactions used to calculate the identified driving score may be identified. This may provide further decreases in processing demand and memory demand. Additionally, performing some operations of the method during the vehicle trip (e.g., identifying vehicle events and events of vehicle interactions) and other operations of the method after the trip has ended (e.g., calculating the driving scores and the vehicle behavior score) may decrease an instantaneous processing demand and decrease latency by preparing data elements (e.g., driving scores) that are used to calculate the vehicle behavior score.

The vehicle behavior score calculated using the methods described herein may be comparable to what a human user would score a fellow human, compared to conventional methods for quantification. Generation and display of the vehicle behavior score may promote safer driving behavior to all road users, not just the vehicle for which the vehicle behavior score is calculated. For example, vehicles may provide a greater distance between the vehicle and road users such as pedestrians and cyclists. Additionally, through communications with road infrastructure devices, vehicles may experience less traffic violations. By using edge computing for computations, data is localized and more private, as third-party users may receive the vehicle behavior score and not data used to calculate the score.

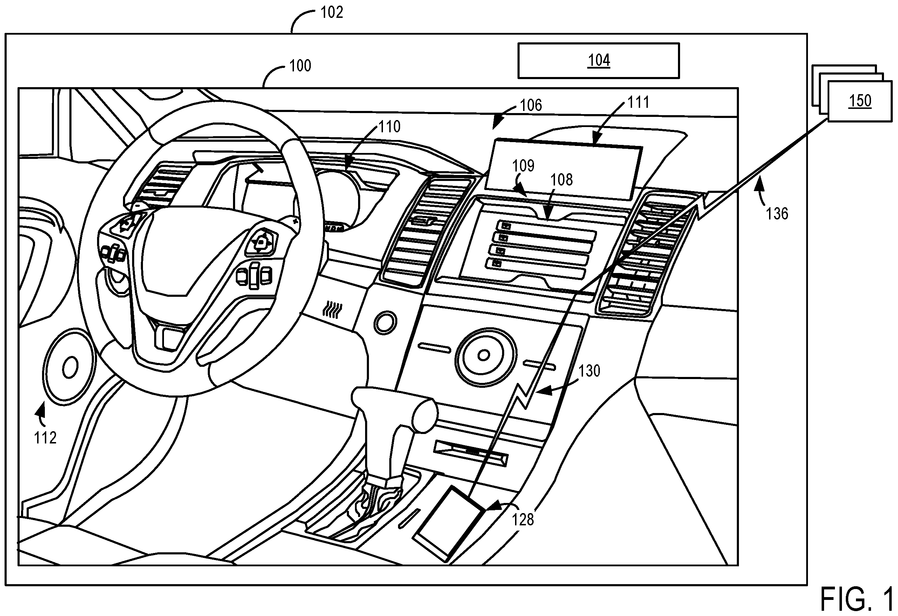

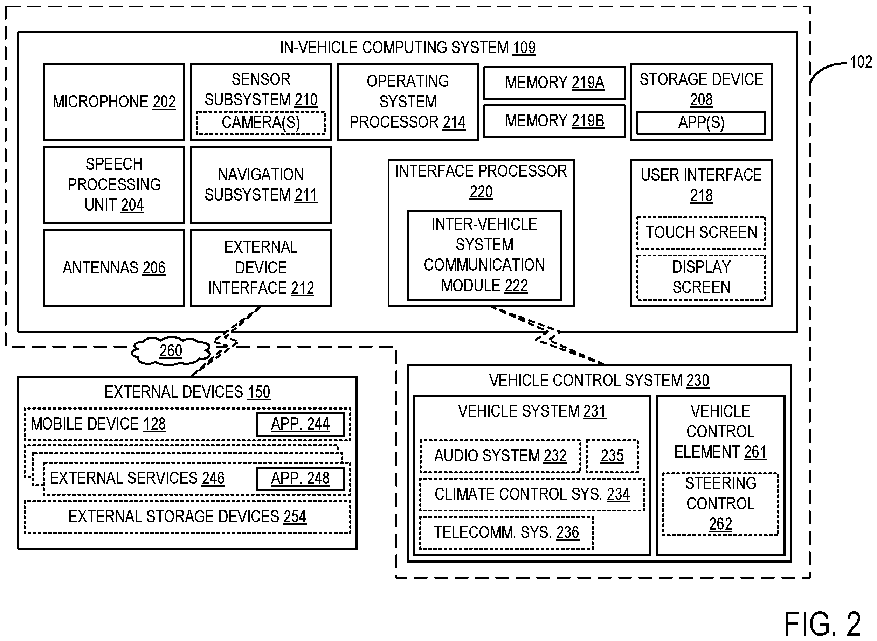

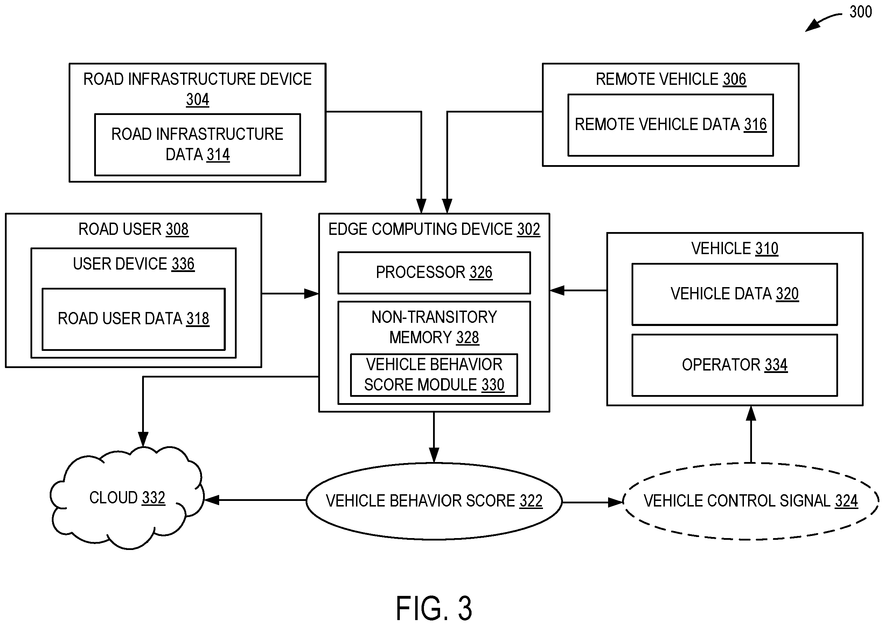

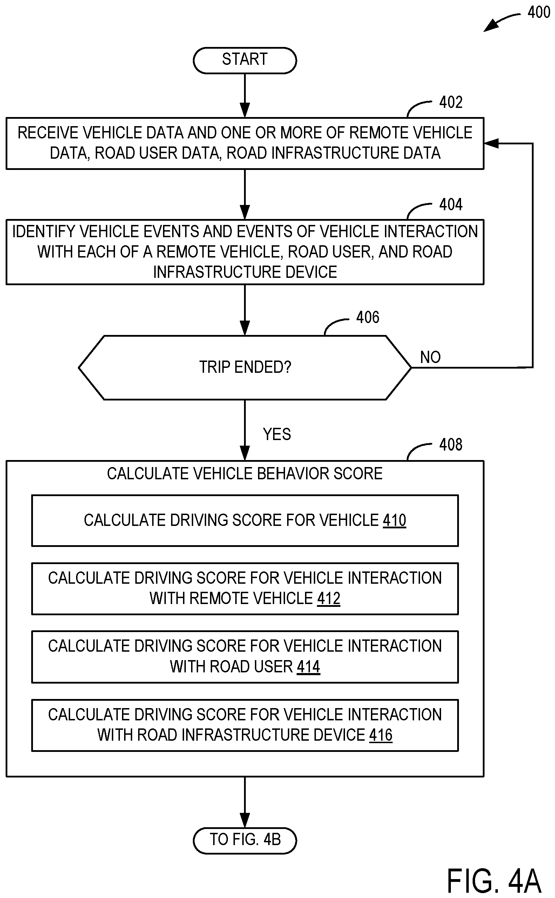

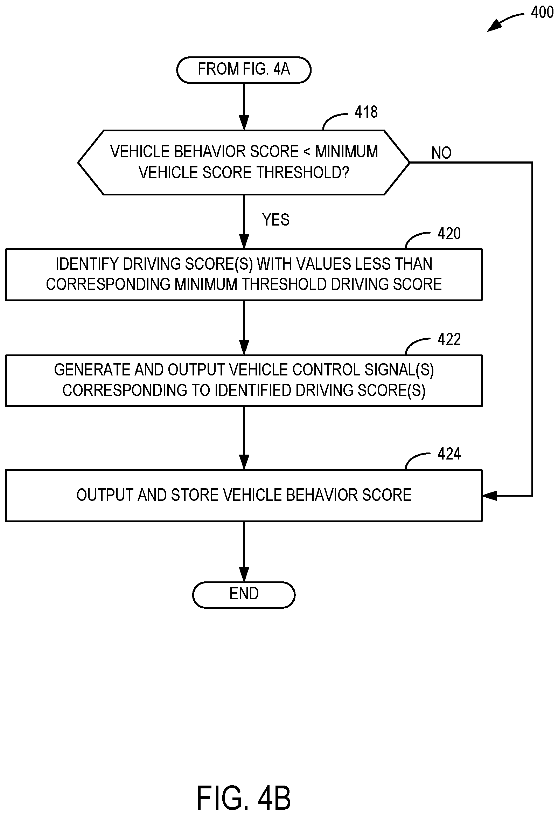

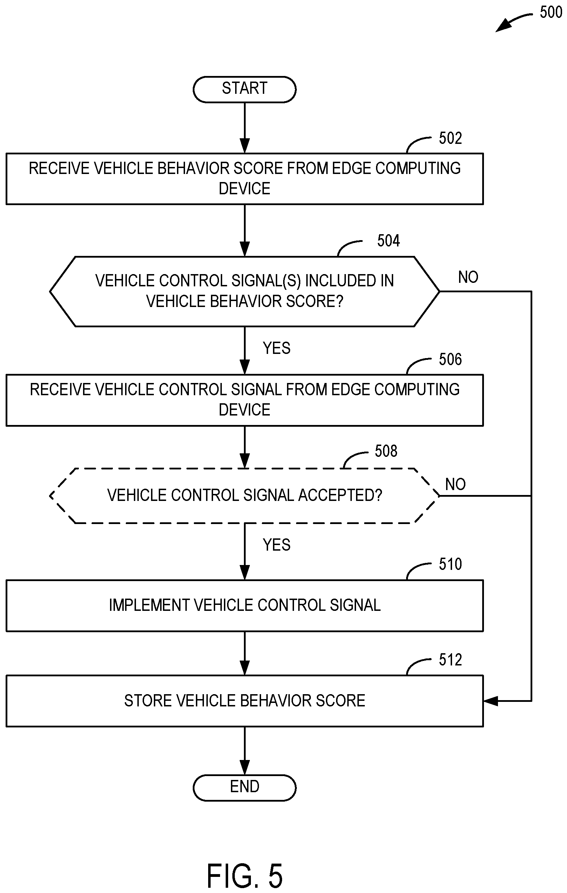

FIG. 1 shows a partial view of a cabin of a vehicle, and FIG. 2 shows a block diagram of an in-vehicle computing system of the vehicle. The vehicle of FIGS. 1-2 may be communicably coupled to an edge computing device of an edge computing architecture. A block diagram of an edge computing architecture is shown in FIG. 3, and further includes one or more road users, road infrastructure devices, and remote vehicles, in addition to the edge computing device and the vehicle. FIGS. 4A and 4B show a method for an edge computing device for calculating a vehicle behavior score. FIG. 5 shows a method for a vehicle system for adjusting operation of the vehicle system in response to receiving a vehicle behavior score and one or more control signals generated by the edge computing device.

FIG. 1 shows an example partial view of an interior of a cabin 100 of a vehicle 102, in which one or more passengers may be seated. In some examples, a passenger may be an operator of the vehicle 102, while in other examples, the vehicle 102 may be an autonomous, driver-less vehicle. Vehicle 102 of FIG. 1 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a human driver (also referred to as the user) of vehicle 102. For example, instrument panel 106 may include a touch screen 108 of an in-vehicle computing system 109 (e.g., an infotainment system), an audio system control panel, and an instrument cluster 110. Touch screen 108 may receive user input to in-vehicle computing system 109 for controlling audio output, visual display output, user preferences, control parameter selection, and so on. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, and so on. The audio system controls may include features for controlling one or more aspects of audio output via one or more speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), and so on, based on user input received directly via touch screen 108, or based on data regarding the user (such as a physical state and/or environment of the user) received via one or more external devices 150 and/or a mobile device 128. The audio system of the vehicle may include an amplifier (not shown) coupled to plurality of loudspeakers (not shown). In some embodiments, one or more hardware elements of in-vehicle computing system 109, such as touch screen 108, a display screen 111, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of in-vehicle computing system 109 may be modular and may be installed in multiple locations of the vehicle.

Cabin 100 may include one or more sensors for monitoring the vehicle, the user, and/or the environment, including vehicle behaviors and/or operator behaviors. For example, cabin 100 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in cabin 100, and so on. In further examples, the sensors may be used to identify and differentiate among different operators of the vehicle. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, and so on. Information regarding ambient conditions of the vehicle, vehicle status, or vehicle operator may also be received from sensors external to/separate from the vehicle (that is, not part of the vehicle system), such as sensors coupled to external devices 150 and/or mobile device 128.

Cabin 100 may also include one or more user objects, such as mobile device 128, that are stored in the vehicle before, during, and/or after travelling. Mobile device 128 may include a smart phone, a tablet, a laptop computer, a portable media player, and/or any suitable mobile computing device. Mobile device 128 may be connected to in-vehicle computing system via a communication link 130. Communication link 130 may be wired (e.g., via Universal Serial Bus (USB), Mobile High-Definition Link (MHL), High-Definition Multimedia Interface (HDMI), Ethernet, and so on) or wireless (e.g., via Bluetooth^{®}, Wi-Fi^{®}, Wi-Fi Direct^{®}, Near-Field Communication (NFC), cellular connectivity, and so on) and configured to provide two-way communication between the mobile device and the in-vehicle computing system. (Bluetooth^{®} is a registered trademark of Bluetooth SIG, Inc., Kirkland, WA. Wi-Fi^{®} and Wi-Fi Direct^{®} are registered trademarks of Wi-Fi Alliance, Austin, Texas.) Mobile device 128 may include one or more wireless communication interfaces for connecting to one or more communication links (e.g., one or more of the example communication links described above). The wireless communication interface may include one or more physical devices, such as antenna(s) or port(s) coupled to data lines for carrying transmitted or received data, as well as one or more modules/drivers for operating the physical devices in accordance with other devices in the mobile device. For example, communication link 130 may provide sensor and/or control signals from various vehicle systems (such as vehicle audio system, climate control system, and so on) and touch screen 108 to mobile device 128 and may provide control and/or display signals from mobile device 128 to the in-vehicle systems and touch screen 108. Communication link 130 may also provide power to mobile device 128 from an in-vehicle power source in order to charge an internal battery of the mobile device.

In-vehicle computing system 109 may also be communicatively coupled to additional devices operated and/or accessed by the user but located external to vehicle 102, such as one or more external devices 150. In the depicted embodiment, external devices are located outside of vehicle 102, though it is to be appreciated that in alternate embodiments, external devices may be located inside cabin 100. The external devices 150 may include a server computing system, edge computing device(s), personal computing system, portable electronic device, electronic wrist band, electronic head band, portable music player, electronic activity tracking device, pedometer, smart-watch, GPS system, and so on. External devices 150 may be connected to the in-vehicle computing system via a communication link 136 which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, and so on and may transmit such information from external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by mobile device 128 and/or external devices 150.

In some embodiments, one or more of external devices 150 may be communicatively coupled to in-vehicle computing system 109 indirectly, via mobile device 128 and/or another of external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128. The aggregated data is then transmitted to in-vehicle computing system 109 and touch screen 108 via communication link 130. Similar data aggregation may occur at a server system and then be transmitted to in-vehicle computing system 109 and touch screen 108 via communication link 136 and/or communication link 130.

FIG. 2 shows a block diagram of the in-vehicle computing system 109 configured and/or integrated inside the vehicle 102. In-vehicle computing system 109 may perform one or more of the methods described herein in some embodiments. In-vehicle computing system 109 may include, or be coupled to, various vehicle systems, sub-systems, hardware components, as well as software applications and systems that are integrated in, or integratable into, vehicle 102 in order to enhance an in-vehicle experience for a driver and/or a passenger.

In-vehicle computing system 109 may include one or more processors including an operating system processor 214 and an interface processor 220. Operating system processor 214 may execute an operating system on in-vehicle computing system 109, and control input/output, display, playback, and other operations of in-vehicle computing system 109. Interface processor 220 may interface with a vehicle control system 230 via an inter-vehicle system communication module 222.

Inter-vehicle system communication module 222 may output data to one or more other vehicle systems 231 and/or one or more other vehicle control elements 261, while also receiving data input from other vehicle systems 231 and other vehicle control elements 261, e.g., by way of vehicle control system 230. When outputting data, inter-vehicle system communication module 222 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System (GPS) sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle). For example, in-vehicle computing system 109 may retrieve from the engine CAN bus the current speed of the vehicle estimated by the wheel sensors, a power state of the vehicle via a battery and/or power distribution system of the vehicle, an ignition state of the vehicle, and so on. In addition, other interfacing means such as Ethernet may be used as well without departing from the scope of this disclosure.

A storage device 208 may be included in in-vehicle computing system 109 to store data such as instructions executable by operating system processor 214 and/or interface processor 220 in non-volatile form. Storage device 208 may store application data, including prerecorded sounds, to enable in-vehicle computing system 109 to run an application for connecting to and/or collecting information for transmission to a cloud-based server and/or an edge computing device. The application may retrieve information gathered by vehicle systems, sensors, input devices (e.g., a user interface 218), data stored in one or more storage devices, such as a volatile memory 219A or a non-volatile memory 219B, devices in communication with the in-vehicle computing system (e.g., a mobile device connected via a Bluetooth^{®} link), and so on. (Bluetooth^{®} is a registered trademark of Bluetooth SIG, Inc., Kirkland, WA.) Volatile memory 219A may be random access memory (RAM). Non-transitory storage devices, such as non-volatile storage device 208 and/or non-volatile memory 219B, may store instructions and/or code that, when executed by a processor (e.g., operating system processor 214 and/or interface processor 220), controls in-vehicle computing system 109 to perform one or more of the actions described in the disclosure.

A microphone 202 may be included in in-vehicle computing system 109 to receive voice commands from a user, to measure ambient noise in the vehicle, to determine whether audio from speakers of the vehicle is tuned in accordance with an acoustic environment of the vehicle, and so on. A speech processing unit 204 may process voice commands, such as the voice commands received from microphone 202. In some embodiments, in-vehicle computing system 109 may also receive voice commands and sample ambient vehicle noise using a microphone included in an audio system 232 of the vehicle.

One or more additional sensors may be included in a sensor subsystem 210 of in-vehicle computing system 109, where sensors of the sensor subsystem 210 are configured to capture information about a vehicle behavior and/or an operator behavior. For example, sensor subsystem 210 may include a camera, such as a rear view camera for assisting a user in parking the vehicle and/or a cabin camera for identifying a user (e.g., using facial recognition and/or user gestures). Sensor subsystem 210 of in-vehicle computing system 109 may communicate with and receive inputs from various vehicle sensors and may further receive user inputs. For example, the inputs received by sensor subsystem 210 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 210 alone, other sensors may communicate with both sensor subsystem 210 and vehicle control system 230, or may communicate with sensor subsystem 210 indirectly via vehicle control system 230. A navigation subsystem 211 of in-vehicle computing system 109 may generate and/or receive navigation information such as location information (e.g., via a GPS sensor and/or other sensors from sensor subsystem 210), route guidance, traffic information, point-of-interest (POI) identification, and/or provide other navigational services for the driver.

An external device interface 212 of in-vehicle computing system 109 may be selectively coupled to and/or communicate with one or more external devices 150 located external to vehicle 102. While the external devices are illustrated as being located external to vehicle 102, it is to be understood that they may be temporarily housed in vehicle 102, such as when the user is operating the external devices while operating vehicle 102. In other words, external devices 150 are not integral to vehicle 102. External devices 150 may include a mobile device 128 (e.g., connected via a Bluetooth^{®}, NFC, WI-FI Direct^{®}, or other wireless connection) or an alternate Bluetooth^{®}-enabled device. (Wi-Fi Direct^{®} is a registered trademark of Wi-Fi Alliance, Austin, Texas.)

Mobile device 128 may be a mobile phone, smart phone, wearable devices/sensors that may communicate with the in-vehicle computing system via wired and/or wireless communication, or other portable electronic device(s). Other external devices include one or more external services 246. For example, the external devices may include extra-vehicular devices that are separate from and located externally to the vehicle. Still other external devices include one or more external storage devices 254, such as solid-state drives, pen drives, Universal Serial Bus (USB) drives, and so on. External devices 150 may communicate with in-vehicle computing system 109 either wirelessly or via connectors without departing from the scope of this disclosure. For example, external devices 150 may communicate with in-vehicle computing system 109 through external device interface 212 over a network 260, a USB connection, a direct wired connection, a direct wireless connection, and/or other communication link.

External device interface 212 may provide a communication interface to enable the in-vehicle computing system to communicate with mobile devices associated with contacts of the driver. For example, external device interface 212 may enable phone calls to be established and/or text messages (e.g., Short Message Service (SMS), Multimedia Message Service (MMS), and so on) to be sent (e.g., via a cellular communications network) to a mobile device associated with a contact of the driver. External device interface 212 may additionally or alternatively provide a wireless communication interface to enable the in-vehicle computing system to synchronize data with one or more devices in the vehicle (e.g., the driver's mobile device) via Wi-Fi Direct^{®}, as described in more detail below.

One or more applications 244 may be operable on mobile device 128. As an example, a mobile device application 244 may be operated to aggregate user data regarding interactions of the user with the mobile device. For example, mobile device application 244 may aggregate data regarding music playlists listened to by the user on the mobile device, telephone call logs (including a frequency and duration of telephone calls accepted by the user), positional information including locations frequented by the user and an amount of time spent at each location, and so on. The collected data may be transferred by application 244 to external device interface 212 over network 260. In addition, specific user data requests may be received at mobile device 128 from in-vehicle computing system 109 via external device interface 212. The specific data requests may include requests for determining where the user is geographically located, an ambient noise level and/or music genre at the user's location, an ambient weather condition (temperature, humidity, and so on) at the user's location, and so on. Mobile device application 244 may send control instructions to components (e.g., microphone, amplifier, and so on) or other applications (e.g., navigational applications) of mobile device 128 to enable the requested data to be collected on the mobile device or requested adjustment made to the components. Mobile device application 244 may then relay the collected information back to in-vehicle computing system 109.

Likewise, one or more applications 248 may be operable on external services 246. As an example, external services applications 248 may be operated to aggregate and/or analyze data from multiple data sources. For example, external services applications 248 may aggregate data from one or more social media accounts of the user, data from the in-vehicle computing system (e.g., sensor data, log files, user input, and so on), data from an internet query (e.g., weather data, POI data), data from an edge computing device to which the in-vehicle computing system 109 is communicably coupled, and so on. The collected data may be transmitted to another device and/or analyzed by the application to determine a context of the driver, vehicle, and environment and perform an action based on the context (e.g., requesting/sending data to other devices).

Vehicle control system 230 may include controls for controlling aspects of various vehicle systems 231 involved in different in-vehicle functions. These may include, for example, controlling aspects of vehicle audio system 232 for providing audio entertainment to the vehicle occupants, aspects of a climate control system 234 for meeting the cabin cooling or heating needs of the vehicle occupants, as well as aspects of a telecommunication system 236 for enabling vehicle occupants to establish telecommunication linkage with others.

Audio system 232 may include one or more acoustic reproduction devices including electromagnetic transducers such as one or more speakers 235. Vehicle audio system 232 may be passive or active such as by including a power amplifier. In some examples, in-vehicle computing system 109 may be a sole audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 234 may be configured to provide a comfortable environment within the cabin or passenger compartment of vehicle 102. Climate control system 234 includes components enabling controlled ventilation such as air vents, a heater, an air conditioner, an integrated heater and air-conditioner system, and so on. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 230 may also include controls for adjusting the settings of various vehicle control elements 261 (or vehicle controls, or vehicle system control elements) related to the engine and/or auxiliary elements within a cabin of the vehicle, such as one or more steering wheel controls 262 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 261 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system. The control signals may also control audio output at one or more speakers 235 of vehicle audio system 232. For example, the control signals may adjust audio output characteristics such as volume, equalization, audio image (e.g., the configuration of the audio signals to produce audio output that appears to a user to originate from one or more defined locations), audio distribution among a plurality of speakers, and so on. Likewise, the control signals may control vents, air conditioner, and/or heater of climate control system 234. For example, the control signals may increase delivery of cooled air to a specific section of the cabin.

Control elements positioned on an outside of a vehicle (e.g., controls for a security system) may also be connected to in-vehicle computing system 109, such as via inter-vehicle system communication module 222. The control elements of vehicle control system 230 may be physically and permanently positioned on and/or in the vehicle for receiving user input. In addition to receiving control instructions from in-vehicle computing system 109, vehicle control system 230 may also receive input from one or more external devices 150 operated by the user, such as from mobile device 128. This allows aspects of vehicle systems 231 and vehicle control elements 261 to be controlled based on user input received from external devices 150.

In-vehicle computing system 109 may further include one or more antennas 206. The in-vehicle computing system may obtain broadband wireless internet access via antennas 206, and may further receive broadcast signals such as radio, television, weather, traffic, and the like. In-vehicle computing system 109 may receive positioning signals such as GPS signals via antennas 206. The in-vehicle computing system may also receive wireless commands via radio frequency (RF) such as via antennas 206 or via infrared or other means through appropriate receiving devices. In some embodiments, antenna 206 may be included as part of audio system 232 or telecommunication system 236. Additionally, antenna 206 may provide AM/FM radio signals to external devices 150 (such as to mobile device 128) via external device interface 212.

One or more elements of in-vehicle computing system 109 may be controlled by a user via user interface 218. User interface 218 may include a graphical user interface presented on a touch screen and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 109 and mobile device 128 via user interface 218. In addition to receiving a user's vehicle setting preferences on user interface 218, vehicle settings selected by in-vehicle control system 230 may be displayed to a user on user interface 218. Notifications and other messages (e.g., received messages), as well as navigational assistance, may be displayed to the user on a display of the user interface. User preferences/information and/or responses to presented messages may be performed via user input to the user interface. For example, the in-vehicle computing system 109 may receive one or more vehicle control commands from an external device 150, such as an edge computing device, and a prompt may be displayed on the user interface 218 that the user may interact with to accept or reject implementation of the vehicle control command. Further detail is described with respect to FIGS. 3A-5.

FIG. 3 shows an example edge computing architecture 300 in which the methods and systems for vehicle behavior monitoring and quantification may be implemented. The edge computing architecture 300 includes an edge computing device 302, a road infrastructure device 304, a remote vehicle 306, a road user 308, and a vehicle 310. Each of the elements of the edge computing architecture 300 are described herein as illustrative examples, and the edge computing architecture 300 may include more than one of any of the given elements. For example, the edge computing architecture 300 may include one or more remote vehicles 306, one or more road users 308, one or more road infrastructure devices 304, one or more edge computing devices 302, and one or more vehicles 310. In some examples, the edge computing architecture 300 may further include one or more transmission control unit (TCU), cell tower, mobile phones, data feeds from third parties, and so on.

The edge computing device 302 is any piece of physical hardware that is connected to and/or hosts an edge computing environment configured to collect and transmit data. For example, the edge computing device 302 may be or include one or more of an internet of things (IoT) sensor, a smart camera, a server, and a processor. The edge computing device 302 may be deployed in a road infrastructure, such as at an intersection, along a freeway as part of a road side unit (RSU), in a traffic controller or stand long deployment, and so on. In the example of FIG. 3, the edge computing device 302 comprises a processor 326 and a non-transitory memory 328 storing a vehicle behavior score module 330. The non-transitory memory 328 stores executable instructions that, when executed, cause the processor 326 to measure and quantify vehicle behavior, as further described herein with respect to FIGS. 4A-4B. The vehicle behavior score module 330 may include one or more tools for processing data received by the edge computing device 302. For example, the vehicle behavior score module 330 may store a trained machine learning algorithm configured to classify anomalies in the data, such as infrequent vehicle behavior events that may or may not qualify as continuously occurring vehicle behavior and thus may or may not be included in calculation of the vehicle behavior score. The machine learning algorithm may be trained using a labeled dataset including vehicle events and events of vehicle interaction that are labeled as being anomalous or not anomalous. The labeled dataset may further include relationships among vehicle events and events of vehicle interactions that indicate influences among these events on whether or not the event is anomalous. For example, a sudden brake event that occurs independent of interaction of the vehicle with a road user, a road infrastructure device, and/or a remote vehicle, and that occurs at a low frequency (e.g., one in five-hundred or more brake events) may be labeled as an anomalous event that is not indicative of a pattern of vehicle behavior. The labeled dataset used to train the machine learning algorithm may be comprised at least in part of simulated data. For example, the labeled dataset may include multiple simulated scenarios that include one or more vehicle events and one or more events of vehicle interaction, each of which are labeled as being anomalous or not, and each of the multiple simulated scenarios being labeled as anomalous or not. In other examples, the labeled dataset may be comprised of historic data from vehicle trips that has been manually labeled as an anomalous or not an anomalous event. For example, vehicle events and events of vehicle behaviors captured during a trip of the vehicle may be manually labeled by a human user as being anomalous or not, and thus indicative or not of patterns in the vehicle behavior. Thus, the trained machine learning algorithm may be used to selectively exclude vehicle events and/or events of vehicle interactions that are identified as anomalous occurrences from calculation of the vehicle behavior score.

The edge computing device 302 is configured to receive data from the vehicle 310 and one or more of the road infrastructure device 304, the remote vehicle 306, and the road user 308 via a communication link between the vehicle 310 and the respective element, and use the data to quantify interactions between the vehicle 310 and the respective element as a vehicle behavior score 322. The vehicle behavior score 322 is a metric that scores behaviors of the vehicle 310, including interactions of the vehicle 310 with elements of the edge computing architecture 300. The vehicle behavior score 322 may be a numeric score, where a higher value score is preferable and indicates desired vehicle behavior. Preferred behaviors of the vehicle 310 (e.g., traveling greater than a minimum proximity from the road user 308, gradually slowing to a stop at an intersection when a traffic signal is amber) may positively contribute to the vehicle behavior score 322. Undesirable behaviors of the vehicle 310 (e.g., closely following an aid vehicle, accelerating through an intersection when a traffic signal is amber) may negatively contribute to the vehicle behavior score 322.

In other examples, an edge computing environment may be deployed by one or more edge computing environments hosted by a mobile network operator (MNO). For example, the edge computing device 302 may be replaced by a base station configured as a fixed transceiver in wired and/or wireless communication with one or more of the vehicle 310, the remote vehicle 306, the road infrastructure device 304, the road user 308, and/or the cloud 332. A core network of the base station and/or the MNO may work with hyper scalers and/or independently to host peering points that enable communication among vehicle 310, the remote vehicle 306, the road infrastructure device 304, and the road user 308. In some examples, data from elements of the edge computing environment may be sent to the vehicle 310, and measurement and quantification of vehicle behavior may be performed by an in-vehicle computing system of the vehicle 310.

The vehicle 310 may be an example of the vehicle 102 of FIGS. 1 and 2. As such, the vehicle 310 may be driven by a user (e.g., a human driver) and/or be driven autonomously by a control system of the vehicle 310. The vehicle 310 may be referred to as an "ego vehicle" or a "host vehicle", as the vehicle 310 is the subject from which interactions with other elements of the edge computing architecture 300 are analyzed. Behaviors of the vehicle 310 are analyzed by the edge computing device 302 in comparison with data from other elements of the edge computing architecture 300. Briefly, behaviors of the vehicle 310 may be factors of acceleration and braking events, as well as speeds at which these events occur. The vehicle 310 outputs vehicle data 320 to the edge computing device 302, and receives the vehicle behavior score 322 from the edge computing device 302. In some examples, the vehicle 310 may additionally receive one or more vehicle control signals 324 from the edge computing device 302. Briefly, the vehicle control signal 324 may indicate a desired change in vehicle behavior that is determined based on the vehicle behavior score 322.

The vehicle 310 further includes an operator 334. The operator 334 may be physically positioned in the vehicle 310 in some examples and operate the vehicle 310 by interacting with one or more vehicle control elements (e.g., the vehicle control elements 261 of FIG. 2). In other examples, the operator 334 may be positioned outside of, and remotely operate, the vehicle 310. Different operators 334 may operate the vehicle 310, for example, the vehicle 310 may be a rental car and/or may be owned by a household with more than one operator. An identity of the operator 334 may be determined by the in-vehicle computing system and included in the vehicle data 320. For example, the in-vehicle computing system may use sensors of a sensor subsystem, a user input via a user interface, a mobile device, and/or another external device communicably coupled (e.g., via a communication link) to the vehicle 310 to determine the identity of the operator 334. As further described herein, the vehicle behavior score 322 may be associated with the operator 334 in addition to and/or instead of being associated with the vehicle 310. For example, when the vehicle 310 is autonomously driven, the vehicle behavior score 322 is associated with the vehicle 310 and stored as a characteristic of the vehicle 310. When the vehicle 310 is driven by the operator 334, the vehicle behavior score 322 may be referred to as an operator behavior score, and the operator behavior score may be stored as a characteristic of the operator 334. The operator behavior score may be stored in the mobile device and/or other external device of the operator 334, and/or may be stored in the non-transitory memory 328 of the edge computing device 302. Thus, when the operator 334 operates different vehicles (e.g., different vehicles configured as described with respect to vehicle 310), the operator behavior score may be accessed by the edge computing device 302 and used to measure and quantify behavior of the operator 334.

The road infrastructure device 304 comprises an element of a road infrastructure environment that may direct a flow of vehicle and non-vehicle traffic. For example, the road infrastructure device 304 may be one or more of a traffic signal, camera, speed radar detector, digitized signage, weather detectors, selective lane dividers, and so on. The road infrastructure device 304 may be configured as, and/or may include one or more, sensors configured to capture road infrastructure data 314. Road infrastructure data 314 may be transmitted from the road infrastructure device 304 to the edge computing device 302.

Road infrastructure data 314 received by the edge computing device 302 from the road infrastructure device 304 and vehicle data 320 received by the edge computing device 302 from the vehicle 310 may be used to quantify interactions between the vehicle 310 and the road infrastructure device 304. In one example, this may include a speed of the vehicle 310 when approaching an amber colored traffic signal (e.g., indicating the traffic signal is about to change to indicate 'stop'). Interactions between the vehicle 310 and the road infrastructure device 304 may further include: a stop position of the vehicle 310 with respect to an intersection, a position of the vehicle 310 in an intersection when a traffic signal is red, an acceleration of the vehicle 310 when a traffic signal turns from red to green, sudden braking of the vehicle 310 near road work, abrupt exit of the vehicle 310 from a freeway, causing braking on remote vehicles, causing congestion (e.g., moving slowly), and so on. Additionally, the road infrastructure data 314 and the vehicle data 320 may be used to monitor potential traffic violations of the vehicle 310, and generate alerts to be output by the edge computing device 302 to the vehicle 310. For example, these alerts may include driving above the speed limit, driving above speed limits near school zones, curves, road works, and other alerts from various applications.

The remote vehicle 306 comprises a vehicle, other than the vehicle 310, that is communicably coupled (e.g., via a communication link) to the edge computing device 302 and is traveling throughout a zone of the edge computing device 302. The edge computing architecture 300 may include one or more remote vehicles 306. Individual remote vehicles may enter and exit the edge computing architecture 300 as the remote vehicle physically enters and/or exits a zone in which the remote vehicle 306 is communicably connected to the edge computing device 302. The remote vehicle 306 may be configured as described with respect to the vehicle 310 of FIGS. 1 and 2. The remote vehicle 306 may be one or more of different types of vehicles. For example, the remote vehicle 306 may be a passenger vehicle, a transit vehicle (e.g., a bus), a maintenance vehicle (e.g., a road work vehicle), an aid vehicle (e.g., a firetruck or ambulance), and so on. The remote vehicle 316 includes sensors, such as one or more of the type of sensors described with respect to the sensor subsystem 210 of FIG. 2, that are configured to capture remote vehicle data 316. Remote vehicle data 316 may be transmitted from the remote vehicle 306 to the edge computing device 302.

Remote vehicle data 316 is used to quantify interactions between the remote vehicle 306 and the vehicle 310. For example, interactions between the remote vehicle 306 and the vehicle 310 are factors of proximity of the vehicle 310 to one or more remote vehicles 306 when the vehicle 310 is merging and/or when the remote vehicle 306 is merging, braking by the remote vehicle 306, a relative distance between the remote vehicle 306 and the vehicle 310, a relative speed of the vehicle 310 with respect to the remote vehicle 306, and so on. Behaviors of the vehicle 310 with respect to the remote vehicle 306 may also factor in a type of the remote vehicle 306. For example, when the remote vehicle 306 is an aid vehicle (e.g., a firetruck or ambulance), a maximum acceptable proximity of the vehicle 310 with respect to the remote vehicle 306 may be greater than when the remote vehicle 306 is a passenger vehicle. When the remote vehicle 306 is an aid vehicle, the maximum acceptable proximity of the vehicle 310 may be within 10 meters (m) of the remote vehicle 306 (e.g., a proximity alert is output by a vehicle control system of the vehicle 310 when the vehicle 310 is less than 10 m from the remote vehicle 306. When the remote vehicle 306 is a passenger vehicle, the maximum acceptable proximity of the vehicle 310 may be within 5 m of the remote vehicle 306 (e.g., a proximity alert is output by the vehicle control system of the vehicle 310 when the vehicle 310 is less than 10 m from the remote vehicle 306).

The road user 308 comprises a non-vehicle user that is communicably coupled to the edge computing device 302. For example, the road user 308 may be a pedestrian that is carrying a mobile phone, wearing a smart device, or is otherwise in possession of a user device 336 that is communicably coupled (e.g., via a communication link) to the edge computing device 302. The user device 336 may include one or more sensors configured to capture road user data 318. In another example, the road user 308 may be a cyclist or other non-vehicle traveler that is carrying a mobile phone, wearing a smart device, or is otherwise in possession of the user device 336 that is communicably coupled to the edge computing device 302. Road user data 318 may be transmitted from the road user 308 to the edge computing device 302.

Road user data 318 received by the edge computing device 302 from the road user 308 is used with the vehicle data 320 to quantify interactions between the vehicle 310 and the road user 308. Interactions between the vehicle 310 and the road user 308 may include factors of a speed of the vehicle 310 when in proximity to the road user 308, a distance between the vehicle 310 and the road user 308 when the vehicle 310 is braking, an acceleration of the vehicle 310 when in proximity to the road user 308, a braking/deceleration of the vehicle 310 when in proximity to the road user 308, and other behaviors of the vehicle 310 with respect to the road user 308, as further described herein.

Each of the road infrastructure device 304, the remote vehicle 306, the road user 308, and the vehicle 310 are independently, communicably coupled (e.g., via a communication link) to the edge computing device 302. These elements may be communicably coupled to the edge computing device 302 via a wired and/or a wireless connection. For example, a mobile device of the road user 308 may be communicably coupled to the edge computing device 302 via a cellular tower wireless connection. A traffic signal of the road infrastructure device 304 may be coupled to the edge computing device 302 via a wired connection. The edge computing device 302 is further communicably coupled to a cloud 332. One or more of the road infrastructure device 304, the remote vehicle 306, the road user 308, and the vehicle 310 may further be independently, communicably coupled to the cloud 332.

Each of the interactions between the vehicle 310 and one or more of the road infrastructure device 304, the road user 308, and the remote vehicle 306 are used by the edge computing device 302 to generate the vehicle behavior score 322. The vehicle behavior score 322 is stored, for example, in the non-transitory memory 328 of the edge computing device 302. Further, the vehicle behavior score 322 is output to other elements. For example, the vehicle behavior score 322 may be output to the cloud 332. From the cloud 332, the vehicle behavior score 322 may be accessed by and/or sent to additional elements that are communicably coupled to the cloud 332, such as fleet managers of a fleet that includes the vehicle 310.

The vehicle behavior score 322 may be analyzed by the edge computing device 302 to determine if the vehicle behavior score 322 is less than a minimum threshold vehicle behavior score. The minimum threshold vehicle behavior score may be set by a vehicle manufacturer of the vehicle 310, an owner of the vehicle 310, an operator of the vehicle 310, and so on. The minimum threshold vehicle behavior score may be used to determine whether or not vehicle behaviors of the vehicle 310 with respect to other elements of the edge computing architecture 300 (e.g., interactions with other road users 308, remote vehicles 306, and road infrastructure devices 304) are preferred. If the vehicle behavior score 322 is less than the minimum vehicle score threshold, the edge computing device 302 may determine that one or more behaviors of the vehicle 310 are undesirable, and it is desirable to adjust one or more vehicle behaviors. In some examples, the vehicle behavior score 322 includes one or more vehicle control signals 324 that are configured to adjust vehicle behavior. The one or more vehicle control signals 324 are sent from the edge computing device 302 to the vehicle 310 to adjust vehicle behavior.

A server that hosts the cloud 332 may be physically positioned thousands of miles away from other elements of the edge computing architecture 300, including the vehicle 310 and the edge computing device 302. A process of sending vehicle data 320 to the cloud 332, processing vehicle data 320 at the cloud 332, and returning processed data and/or an output of data processing to the vehicle 310 may include a latency of 150 to 200 milliseconds (ms) at minimum. Transmitting, processing, and receiving road user data 318, road infrastructure data 314, and remote vehicle data 316 among respective elements and the cloud 332 may include a similar or greater latency. In methods for monitoring, quantifying, and adjusting vehicle behavior, such as the methods described herein, this latency may be insufficient. For example, a shorter reaction time to adjusting vehicle behavior may be demanded when adjusting a minimum distance between the vehicle 310 and the road user 308, and/or a speed of the vehicle 310 with respect to the remote vehicle 306. A desired latency for calculating and outputting the vehicle behavior score 322 may be between 20 and 30 ms maximum. The edge computing device 302 is physically close to the vehicle 310 and other elements of the edge computing architecture 300 (e.g., within 100 miles), thus executing calculation of the vehicle behavior score 322 using the edge computing device 302 may decrease latency, compared to executing the method using the cloud 332. Additionally, the decreased latency due to monitoring and quantifying vehicle behavior using the edge computing device may increase a range of vehicle behaviors and vehicle interactions that may be used to calculate the vehicle behavior score 322. As the latency is relatively low (e.g., 20-30 ms maximum) when using the edge computing device 302, data elements that may change throughout a trip of the vehicle 310 may be used in calculations of the vehicle behavior score 322. For example, a position of the road user 308, an active/inactive aid vehicle state (e.g., lights/sirens on) of the remote vehicle 306, and a traffic light state (e.g., red, green, amber) may be identified in near-real time by the edge computing device 302. One or more events, including interactions of the vehicle 310 with one or more of the remote vehicle 306, the road user 308, and the road infrastructure device 304 may happen simultaneously and/or at different times. Using the edge computing device 302 instead of using the cloud 332 to monitor and quantify vehicle behavior enables receipt of data from the different elements of the edge computing architecture 300 in near-real time. Remote vehicle data 316, road user data 318, vehicle data 320, and road infrastructure data 314 may be more accessible to the edge computing device 302, compared to the cloud 332. Data from these various elements may thus be directly available to the edge computing device 302 and may be combined to calculate the vehicle behavior score 322.

FIGS. 4A and 4B show a flow chart for a method 400 for monitoring and quantifying vehicle behavior. Specifically, the method 400 includes calculating a vehicle behavior score for a vehicle, where the vehicle behavior score quantifies interactions of the vehicle with various elements of an edge computing architecture. The method 400 may be stored on and implemented by an edge computing device, such as the edge computing device 302 of FIG. 2. The method 400 is described herein with respect to the edge computing architecture 300 of FIG. 3. For example, the non-transitory memory 328 of the edge computing device 302 may store executable instructions in the vehicle behavior score module 330 that, when executed, cause the processor 326 to receive vehicle data from a vehicle, receive remote vehicle data from a remote vehicle, receive road user data from a road user, receive road infrastructure data from a road infrastructure device, calculate a vehicle behavior score of the vehicle using vehicle data and one or more of remote vehicle data, road user data, and road infrastructure data, and output the vehicle behavior score to the vehicle. The method 400 may further include comparing the vehicle behavior score for the vehicle to a minimum vehicle score threshold and, in response to the vehicle behavior score being less than the minimum vehicle score threshold, generating and outputting one or more vehicle control signals corresponding to a driving score identified as being less than a corresponding minimum threshold driving score. In some examples, the method 400 may be executed by a processor of a cloud, such as the cloud 332 of FIG. 3, when the processor 326 of the edge computing device 302 is unavailable for processing. The method 400 may also be used to monitor and quantify behavior of an operator of the vehicle. An operator behavior score may be equal to and calculated in the same way as the vehicle behavior score, described herein, and may be stored and/or output with operator identity information in addition to and/or instead of vehicle information.

At 402, the method 400 includes receiving vehicle data and one or more of remote vehicle data, road user data, and road infrastructure data. The edge computing device may receive vehicle data from a vehicle, remote vehicle data from one or more remote vehicles, road user data from one or more road users, and road infrastructure data from a road infrastructure device via a wired or wireless connection of each element. When the vehicle is being operated by a user, the vehicle data may include information about an identity of the operator. Data may be transferred/transmitted to the edge computing device from a respective element via a wired or a wireless connection. In some examples, the received data may be un-structured and may include one or more anomalies. The method 400 may include identifying anomalies in at least one of the vehicle data, remote vehicle data, road user data, and road infrastructure data; and correcting identified anomalies prior to calculating the vehicle behavior score. Correcting anomalies may include identifying behaviors that deviate from typical behaviors of the vehicle and/or the operator, and may be excluded from calculation of the vehicle behavior score. For example, the vehicle may perform an abrupt stop at a frequency that is below a threshold frequency. The threshold frequency may define anomalous behavior, where a number of occurrences of the behavior less than the threshold frequency is considered anomalous, and thus the behavior may not be used to calculate the vehicle behavior score. A number of occurrences of the behavior equal to or greater than the threshold frequency is considered a "true" behavior, and is used as a factor in calculation of the vehicle behavior score. In some examples, a trained machine learning algorithm (e.g., stored in the vehicle behavior score module 330 of FIG. 3, as described with respect to FIG. 3) may be used to classify anomalies in the data.

At 404, the method 400 includes identifying vehicle events and events of vehicle interaction with one or more of the remote vehicle, the road user, and the road infrastructure device. Vehicle events are behaviors of the vehicle and/or a user of the vehicle, acceleration and braking of the vehicle, location, heading, speed, and so on. Vehicle events may be monitored by sensors of the vehicle, as described with respect to FIGS. 1-2. For example, vehicle data captured by sensors of the vehicle may be used to calculate jerk (e.g., a rate of change of acceleration), sudden acceleration/braking, a yaw rate, an idle time, and other operating parameters of the vehicle.

Events of vehicle interaction include using vehicle data and data from a respective element (e.g., road user data, road infrastructure device data, remote vehicle data) to identify behavior of the vehicle with respect to other elements of the edge computing architecture. For example, remote vehicle data from the remote vehicle may include one or more of a location, a speed, a heading, an acceleration, and a braking of the remote vehicle. This remote vehicle data may be compared to vehicle data of the vehicle (e.g., the ego vehicle) to identify events of vehicle interaction therebetween. These events may include calculating a distance between the vehicle and the remote vehicle, calculating relative speeds of each of the vehicle and the remote vehicle, calculating a speed and distance of the vehicle with respect to an aid vehicle, calculating a distance from and a heading of the vehicle with respect to an aid vehicle, calculating a lateral and a longitudinal distance between the vehicle and the remote vehicle during a lane change/merge of the vehicle and/or the remote vehicle, and so on. As multiple remote vehicles may be simultaneously present in the edge computing architecture, these calculations and comparison of remote vehicle data and vehicle data may be performed for each remote vehicle. These events are non-exhaustive and additional behaviors related to vehicle and remote vehicle interactions are considered.

Road user data from the road user may include one or more of a location, a speed, and a heading of the remote user, as determined using a device held and/or worn by the user that is communicably coupled to the edge computing device. In some examples, road user data may be additionally or alternatively captured using road infrastructure devices, such as cameras and/or sensors. The road user data may be compared to vehicle data of the vehicle to identify events of vehicle interaction therebetween. For example, these events may include calculating a distance between the vehicle and the road user, calculating jerk when the vehicle is in proximity to the road user, calculating a time until a position of the vehicle is the same as a position of the road user, calculating a lateral and a longitudinal distance between the road user and the vehicle, and so on. As multiple road users may be simultaneously present in the edge computing architecture, these calculations and comparison of road user data and vehicle data may be performed for each road user. These events are non-exhaustive and additional behaviors related to vehicle and road user interactions are considered.

Road infrastructure data from the road infrastructure device include one or more of traffic light information (e.g., stop, go, slow), speed limits, road work information, geometry of the road, lane dividers, intersection boundaries, presence of stop signs, and so on. Road infrastructure data may be sourced from road infrastructure devices such as sensors, cameras, traffic signals, and so on. Additionally, road infrastructure data may be sourced from external data sources communicably coupled to the edge computing device, such as databases and/or servers storing maps and other information about configurations of the road infrastructure. The road infrastructure data may be compared to vehicle data of the vehicle to identify events of vehicle interaction therebetween. For example, these events may include calculating a potential or an actual red light violation of the vehicle based on traffic light state, calculating stoppage of the vehicle within boundaries of an intersection, detecting stop sign violation of the vehicle, calculating jerk of the vehicle when the traffic light is amber, calculating jerk of the vehicle in/near road work, and calculating and/or detecting other behaviors.

Identification of vehicle events and vehicle interaction with one or more of the remote vehicle, the road user, and the road infrastructure device may be performed continuously during a trip of the vehicle. In some examples, data is collected by the edge computing device from each element at regular intervals. For example, each element of the edge computing architecture may continuously collect data and/or may collect data at an interval determined by a manufacturer and/or operator of the element, and the edge computing device may retrieve data from each element at a regular interval. In other examples, the edge computing device may retrieve data from each element at a dynamic interval. Events may be stored in the memory of the edge computing device to be later used to calculate the vehicle behavior score. For example, the vehicle behavior score may be calculated following completion of a trip by the vehicle.

At 406, the method 400 includes determining if a trip of the vehicle is has ended. The edge computing device may determine that the trip of the vehicle has ended in response to no longer receiving vehicle data from the vehicle. In another example, the edge computing device may determine that the trip of the vehicle has ended in response to receiving vehicle data that indicates the vehicle is in a park mode and/or is off. In response to determination that the trip of the vehicle has not ended (e.g., 406 is NO), the method 400 returns to 402, and the edge computing device continues to receive vehicle data and one or more of remote vehicle data, road user data, and road infrastructure data.

In response to determination that the trip of the vehicle has ended (e.g., 406 is YES), the method 400 proceeds to 408. At 408, the method 400 includes calculating a vehicle behavior score. Calculating the vehicle score comprises calculating a driving score for the vehicle, as well as calculating driving scores for interactions of the vehicle with each element of the edge computing architecture using the vehicle events described above.

Each vehicle event is referred to herein as an attribute "attr" of a "factor" (f), which are themselves a driving score. For example, each factor may be valued between 0 and 100, where a score closer to zero indicates undesired behavior, and a score closer to 100 indicates desired behavior. A computation is performed by adding weighted negative points for undesired behavior, and weighted positive points for desired behavior. The resulting value is subtracted from 100, as shown in equation 1: f(factor) = Max(100,100 + wattr1f(attr1) + wattr2f(attr2) + wattr3f(attr3) + ···)

Weightages (w) on each of the attributes may be determined for each implementation/deployment of the method, and may control influence of a respective behavior on the overall score. Weights have values between zero and one. Equation 1 may be used to calculate a driving score for the vehicle, based on vehicle data, and to calculate a driving score for each interaction of the vehicle with one or more road users, road infrastructure devices, and remote vehicles, using respective data.

At 410, the method 400 includes calculating a driving score for the vehicle. For example, calculating the driving score includes applying a first weight (wₐₜₜᵣ₁) to a first factor (e.g., calculated jerk of the vehicle), applying a second weight (wₐₜₜᵣ₂) to a second factor (e.g., sudden acceleration of the vehicle), applying a third weight (wₐₜₜᵣ₃) to a third factor (e.g., sudden braking), and so on with other factors of vehicle behavior calculated by the edge computing device using vehicle data. The resulting values are summed and subtracted from 100 to generate the driving score for the vehicle.

At 412, the method 400 includes calculating a driving score for vehicle interaction with the remote vehicle. For example, calculating the driving score includes applying a first weight (wₐₜₜᵣ₁) to a first factor of vehicle-remote vehicle interaction (e.g., distance between the vehicle and the remote vehicle), applying a second weight (wₐₜₜᵣ₂) to a second factor of vehicle-remote vehicle interaction (e.g., relative speeds of each of the vehicle and the remote vehicle), applying a third weight (wₐₜₜᵣ₃) to a third factor of vehicle-remote vehicle interaction (e.g., a lateral and a longitudinal distance between the vehicle and the remote vehicle during a lane change/merge of the vehicle and/or the remote vehicle), and so on with other factors of vehicle-remote vehicle interaction calculated by the edge computing device using vehicle data and remote vehicle data. The resulting values are summed and subtracted from 100 to generate the driving score for vehicle-remote vehicle interaction.

At 414, the method 400 includes calculating a driving score for vehicle interaction with the road user. For example, calculating the driving score includes applying a first weight (wₐₜₜᵣ₁) to a first factor of vehicle-road user interaction (e.g., jerk when the vehicle is in proximity to the road user), applying a second weight (wₐₜₜᵣ₂) to a second factor of vehicle-road user interaction (e.g., distance between the vehicle and the road user), applying a third weight (wₐₜₜᵣ₃) to a third factor of vehicle-road user interaction (e.g., lateral and a longitudinal distance between the road user and the vehicle), and so on with other factors of vehicle-road user interaction calculated by the edge computing device using vehicle data and road user data. The resulting values are summed and subtracted from 100 to generate the driving score for vehicle-road user interaction.

At 416, the method 400 includes calculating a driving score for vehicle interaction with the road infrastructure device. For example, calculating the driving score includes applying a first weight (wₐₜₜᵣ₁) to a first factor of vehicle-road infrastructure interaction (e.g., a red light violation of the vehicle), applying a second weight (wₐₜₜᵣ₂) to a second factor of vehicle-road infrastructure interaction (e.g., stoppage of the vehicle within boundaries of an intersection), applying a third weight (wₐₜₜᵣ₃) to a third factor of vehicle-road infrastructure interaction (e.g., jerk of the vehicle when the traffic light is amber), and so on with other factors of vehicle-road infrastructure interaction calculated by the edge computing device using vehicle data and road infrastructure data. The resulting values are summed and subtracted from 100 to generate the driving score for vehicle-road infrastructure interaction.

Each driving score may be normalized based on a trip time of the vehicle. Calculating the vehicle behavior score further comprises applying weights to each of the driving scores calculated in operations 410-416. Additionally, calculation of the vehicle behavior score may include a weighted value of detected traffic violations and alerts for the vehicle. For example, the edge computing device may receive data from a device other than the vehicle that includes information about a traffic violation committed by the vehicle, or other operational alert relevant to the vehicle. For example, the edge computing device may receive data indicating the vehicle has one or more recorded moving violations that exceed 15 miles per hour above a speed limit. In response, the edge computing device may apply a greater weight to speed-related behaviors of the vehicle when calculating the vehicle behavior score. In another example, the edge computing device may receive data, such as from a weather monitoring device, that there is standing water on the roadway on which the vehicle is traveling. In response, the edge computing device may apply a greater weight to desired behaviors of the vehicle when in proximity to the standing water, such as decreasing speed and/or acceleration. The vehicle behavior score may be calculated using equation 2, below: f(vehicle behavior score) = wvehiclef (driving score of vehicle) + wvruf (vehicle - road user interaction) + wremote vehiclef (vehicle - remote vehicle interactions) + winfrastrcturef (vehicle - road infrastucture interaction) + walertsf (traffic violation and alerts)

The factors (f) may each be a sum of driving scores for a respective vehicle interaction. For example, f (vehicle-road user interaction) may be a sum of driving scores for each vehicle-road user interaction, where the vehicle may interact with one or more road users, and may interact with each road user one or more times. The vehicle behavior score is a sum of the weighted factors. In some examples, the vehicle behavior score may have a maximum score of 100, where a vehicle behavior score of 100 is preferred vehicle behavior and a driving score of 0 is undesired vehicle behavior. Weights (w) applied to each of the factors may be determined for each implementation/deployment of the method, and may control influence of a respective behavior on the overall score. Weights have values between zero and one. For example, a first weight (w_{vehicle}) applied to the driving score of the vehicle may be greater than or less than a second weight (wᵥᵣᵤ) applied to the driving score of the vehicle-road user interaction.

The method 400 continues in FIG. 4B. At 418, the method 400 includes determining if the vehicle behavior score is less than a minimum vehicle score threshold. The minimum vehicle score threshold may be set by static or a dynamic threshold. For example, the minimum vehicle score threshold may be set by a manufacturer of the vehicle, a local regulatory body, an owner of the vehicle, and so on. The minimum vehicle score threshold may be adjusted in response to user input, infrastructure conditions, region, weather, time of day, and so on. The minimum vehicle score threshold is thus used to monitor behavior of the vehicle, and identify when it may be desirable to adjust vehicle behavior. For example, the minimum vehicle score threshold may be 70, when the vehicle behavior score is quantified on a scale of 0 to 100. In vehicle-road user interactions, a distance between the vehicle and the road user may be less than a minimum desired distance, which may negatively affect the driver score and the vehicle behavior score. In another example, in vehicle-road infrastructure interactions, the vehicle may maintain a traveling speed (e.g., instead of jerking acceleration) when approaching an amber traffic light), which may positively affect the driving score and the vehicle behavior score. The vehicle behavior score may be comprised of multiple positive and negative driving scores (e.g., high value driving scores and low value driving scores). When the vehicle behavior score is equal to or greater than the minimum vehicle score threshold (e.g., 418 is NO), vehicle behavior may be identified as acceptable, and no changes to the vehicle behavior may be desired. In response to determination that the vehicle behavior score threshold is not less than the minimum vehicle score threshold, the method 400 proceeds to 424.

At 424, the method 400 includes outputting and storing the vehicle behavior score. The vehicle behavior score may be stored in the memory of the edge computing device. The vehicle behavior score may be output from the edge computing device to one or more elements of the edge computing architecture. For example, the vehicle behavior score may be output to the cloud and/or to the vehicle. Further, the vehicle behavior score may be output to elements and/or systems that are communicably coupled to the edge computing device. For example, a vehicle rental company may own and operate multiple vehicles, and a system of the vehicle rental company may be communicably coupled to the edge computing device and may receive a vehicle score for each of the owned vehicles. The system may include a database to store and assign the vehicle behavior score to a rental period for a respective rental vehicle of the owned vehicles. The respective rental vehicle may be assigned multiple vehicle behavior scores during the rental period (e.g., a vehicle behavior score for each trip of the rental vehicle). The vehicle behavior scores may be used to determine a cost of the rental vehicle for a user. In other examples, the vehicle behavior score is output and stored as the operator behavior score associated with the operator of the vehicle. The operator behavior score is in this way assigned to an individual operator, based on the identity of the operator. The operator behavior score may be accessed during future vehicle trips where the operator is operating the vehicle, and may be used to generate and output vehicle control signals and/or notifications related to driving scores used to calculate the operator behavior score. In some examples, the operator behavior score may be used to determine whether or not the operator is eligible to operate the vehicle and/or other operational conditions available to the operator, such as a maximum speed and/or driving range of the vehicle.

Returning to operation 418, in response to determination that the vehicle behavior score is less than the minimum vehicle threshold score (e.g., 418 is YES), the method 400 proceeds to 420. The vehicle behavior score being less than the minimum vehicle threshold score indicates that one or more behaviors of the vehicle are undesirable, and adjustment to vehicle operation with respect to other elements of the edge computing architecture may be desired. At 420, the method 400 includes identifying one or more driver scores with values that are less than a corresponding minimum threshold driving score. For example, a vehicle-remote vehicle interaction driver score may be less than a minimum vehicle-remote vehicle interaction score threshold when one or more of a distance between a vehicle and a remote vehicle is less than a minimum threshold distance, when a relative speed of the vehicle is greater than a relative speed of the remote vehicle by greater than a threshold speed difference, and so on.

At 422, the method 400 includes generating and outputting one or more vehicle control signals, each of which correspond to a driving score identified at operation 420 as being less than a corresponding minimum threshold driving score. In some examples, operation 422 may be an optional step of the method 400. In the example where the vehicle-remote vehicle interaction driver score is less than the minimum vehicle-remote vehicle interaction driver score threshold, the method 400 may include generating a control signal to increase a minimum allowable distance between the vehicle and the remote vehicle, and/or decrease a maximum allowable speed of the vehicle when in proximity to the remote vehicle. In another example, a speed of the vehicle when in a first proximity to a road user may be greater than a maximum acceptable speed. This negatively influences the calculated vehicle-remote vehicle interaction driver score value, as described with respect to method 400 using equation 1. The vehicle-remote vehicle interaction driver score may be less than the corresponding driver score threshold. As a result of the vehicle-remote vehicle interaction driver score value and other values used to calculate the vehicle behavior score (e.g., using equation 2), the vehicle behavior score is less than the minimum threshold behavior score. The edge computing device identifies the speed of the vehicle when in the first proximity to the road user as being a contributing factor to the vehicle behavior score being below the minimum threshold behavior score. The edge computing device thus generates and output a first control signal corresponding to the speed of the vehicle when in the first proximity to the road user. For example, the first control signal may control the vehicle system to implement a maximum speed of the vehicle when the vehicle is within a predetermined range of a road user (e.g., the first proximity), such as a cyclist and/or pedestrian. As further described with respect to FIG. 5, the vehicle may be user-driven and/or may be autonomous. Thus, the control signal generated and output by the edge computing device to the vehicle may automatically control operation of the vehicle, and/or may be presented to the control system of the vehicle as an optional action.

In another example, the edge computing device may additionally output one or more vehicle control signals to one or more remote vehicles and/or other systems communicably coupled to the edge computing device and/or the vehicle for which the vehicle behavior score is calculated. For example, in response to determination that a distance between the vehicle and a road user may be undesirably small, the edge computing device may generate and output a control signal including an alert that is displayed by a control system of the vehicle to notify users of the vehicle that the vehicle is in close proximity to a road user. Additionally, the control signal may be sent to other remote vehicles within a radius of the vehicle to notify the remote vehicles of the presence of non-vehicle road users. The method 400 proceeds from operation 422 to operation 424 to output and store the vehicle behavior score, as described above. The method 400 ends.

FIG. 5 shows a flow chart for a method 500 for adjusting operation of a vehicle system in response to receiving a vehicle behavior score. The method 500 may also be used to adjust operation of the vehicle system in response to receiving the operator behavior score, according to the same operations described herein for the vehicle behavior score. The method 500 is implemented by a vehicle control system of a vehicle that is communicably coupled to an edge computing device configured to calculate and output a vehicle behavior score. The vehicle may be an example of the vehicle 310 of FIGS. 1-3, and the edge computing device may be an example of the edge computing device of FIG. 3. The method 500 is thus described with respect to FIGS. 1-3. For example, the method 500 may be stored on and implemented by an edge computing device, such as the edge computing device 302 of FIG. 2. The method 500 is described herein with respect to the edge computing architecture 300 of FIG. 3. For example, the non-transitory memory 328 of the edge computing device 302 may store executable instructions in the vehicle behavior score module 330 that, when executed, cause the processor 326 to receive a vehicle behavior score, determine if the vehicle behavior score includes one or more vehicle control signals, optionally accept the vehicle control signal, implement the vehicle control signal, and store the vehicle behavior score. Prior to execution of the method 500, the vehicle sends vehicle data to the edge computing device.

At 502, the method 500 includes receiving a vehicle behavior score from the edge computing device. The vehicle behavior score is a quantification of behaviors of the vehicle (e.g., that is executing the method 500) and interactions of the vehicle with other elements of an edge computing architecture, including one or more road users, road infrastructure devices, and remote vehicles. The vehicle behavior score may be calculated as described with respect to the method 400 of FIGS. 4A and 4B.

At 504, the method 500 includes determining if the vehicle behavior score includes one or more vehicle control signals. As described with respect to the method 400, the edge computing device may generate and output one or more vehicle control signals in response to the vehicle behavior score being less than a minimum threshold vehicle behavior score. For example, the first control signal may control the vehicle system to implement a maximum speed of the vehicle when the vehicle is within a predetermined range of a road user (e.g., the first proximity), such as a cyclist and/or pedestrian.

In response to the vehicle behavior score not including a vehicle control signal (e.g., 504 is NO), the method 500 proceeds to 512. At 512, the method 500 includes storing the vehicle behavior score. The vehicle behavior score may be stored in a memory of the vehicle. The method 500 ends.

Returning to operation 504, in response to the vehicle behavior score including one or more vehicle control signals (e.g., 504 is YES), the method 500 proceeds to 506. At 506, the method 500 includes receiving the vehicle control signal(s) from the edge computing device.

At 508, the method 500 optionally includes determining if the vehicle control signal is accepted. The vehicle may be a user-driven vehicle and/or an autonomous vehicle. In one or more of these configurations, it may be optional to accept and implement the vehicle control signal. For example, upon receiving a vehicle behavior score, the vehicle control system (e.g., the in-vehicle computing system 109 of FIGS. 1-2) may output a notification indicating that the vehicle control signal has been received. In response to receiving a user input (e.g., input by a user of the vehicle via a user interface of the vehicle, input by an owner/manager of the vehicle other than the driver at a system communicably connected to the vehicle), implementation of the vehicle control signal may be accepted or rejected. In some examples, the vehicle control signal may be automatically accepted by the vehicle control system. For example, the vehicle control system may count a number of times that a vehicle control signal that is configured to control operation of the vehicle is received. In response to the number of vehicle control signals received exceeding a predetermined, non-zero integer threshold, the vehicle control system may automatically implement one or more parameters to control vehicle operation, such as sending a command to the vehicle control system to automatically adjust a distance of the vehicle from the road user (e.g., setting a minimum distance between the vehicle and the road user).

If the vehicle control signal is not accepted, the method 500 proceeds to 512. The vehicle control signal is not implemented (e.g., 508 is NO), vehicle behavior corresponding to the vehicle control signal is not adjusted, and the vehicle behavior score is stored. The method 500 ends.

Returning to 508, when the vehicle control signal is accepted (e.g., 508 is YES), the method 500 proceeds to 510. At 510, the method 500 includes implementing the vehicle control signal. Implementing the vehicle control signal may include implementing additional or alternative thresholds and/or parameters for vehicle operation. For example, implementing the first vehicle control signal includes implementing a maximum speed of the vehicle when the vehicle is within a predetermined range of a road user. Implementing the vehicle control signal may additionally or alternatively include outputting a notification via one or more of the user interface, the speakers, and so on of the vehicle, to indicate that the vehicle is or may soon be operating in a way that may cause the vehicle behavior score to decrease. Operations 506-510 may be repeated for all control signals included in the vehicle behavior score received from the edge computing device. At 512, the method includes storing the vehicle behavior score. The vehicle behavior score may be stored in a memory of the vehicle. The method 500 ends.

The disclosure also provides support for a method for an edge computing device, comprising: receiving, at an edge computing device, vehicle data from a vehicle via a communication link between the vehicle and the edge computing device, receiving, at the edge computing device, remote vehicle data from a remote vehicle via a communication link between the remote vehicle and the edge computing device, receiving, at the edge computing device, road user data from a road user via a communication link between the road user and the edge computing device, receiving, at the edge computing device, road infrastructure data from a road infrastructure device via a communication link between the road infrastructure device and the edge computing device, executing instructions stored in a non-transitory memory of the edge computing device via a processor of the edge computing device to calculate a vehicle behavior score of the vehicle using vehicle data and one or more of remote vehicle data, road user data, and road infrastructure data, and outputting and storing the vehicle behavior score. In a first example of the method, calculating the vehicle behavior score comprises identifying vehicle events of vehicle interaction with each of the remote vehicle, the road user, and the road infrastructure device using vehicle data and remote vehicle data, road user data, and road infrastructure data, respectively. In a second example of the method, optionally including the first example, the method further comprises: applying a weight to each vehicle event, and calculating a sum of weighted vehicle events to identify a driving score for interactions of the vehicle with each of the remote vehicle, the road user, and the road infrastructure device. In a third example of the method, optionally including one or both of the first and second examples, calculating the vehicle behavior score comprises: calculating a weighted sum of the driving score for vehicle-remote vehicle interaction, the driving score for vehicle-road user interaction, the driving score for vehicle-road infrastructure device interaction, and the driving score for the vehicle. In a fourth example of the method, optionally including one or more or each of the first through third examples, calculating the vehicle behavior score further comprises calculating the weighted sum of traffic violations and alerts of the vehicle. In a fifth example of the method, optionally including one or more or each of the first through fourth examples, the method further comprises: comparing the vehicle behavior score to a minimum vehicle score threshold and, in response to the vehicle behavior score being less than the minimum vehicle score threshold, identifying one or more driving scores that are less than a corresponding minimum threshold driving score. In a sixth example of the method, optionally including one or more or each of the first through fifth examples, the method further comprises: generating and outputting one or more control signals that correspond to a driving scored identified as being less than the corresponding minimum threshold driving score. In a seventh example of the method, optionally including one or more or each of the first through sixth examples, the vehicle is configured to adjust operation of the vehicle in response to receiving a control signal. In an eighth example of the method, optionally including one or more or each of the first through seventh examples, the vehicle behavior score is calculated in response to determination that a trip of the vehicle has ended. In a ninth example of the method, optionally including one or more or each of the first through eighth examples, the vehicle behavior score is output and stored in association with an identity of an operator of the vehicle as an operator behavior score. In a tenth example of the method, optionally including one or more or each of the first through ninth examples, the method further comprises: identifying anomalies in at least one of the vehicle data, remote vehicle data, road user data, and road infrastructure data, and correcting identified anomalies prior to calculating the vehicle behavior score.

The disclosure also provides support for a method for a vehicle, comprising: receiving a vehicle behavior score from an edge computing device, the vehicle behavior score computed based on vehicle data and at least one of road infrastructure data, remote vehicle data, and road user data, adjusting behavior of a vehicle system in response to the vehicle behavior score, and storing the vehicle behavior score. In a first example of the method, the method further comprises: receiving a vehicle control signal, and implementing the vehicle control signal to adjust operation of the vehicle system. In a second example of the method, optionally including the first example, implementing the vehicle control signal comprises outputting a notification to a user interface of the vehicle to optionally implement the vehicle control signal. In a third example of the method, optionally including one or both of the first and second examples, the vehicle control signal is implemented in response to receiving a user input.

The disclosure also provides support for a system, comprising: a vehicle having a sensor subsystem configured to capture information about a vehicle behavior and/or an operator behavior, the vehicle further configured to adjust operation of a vehicle system in response to receiving a vehicle control signal, and an edge computing device communicably coupled to the vehicle, the edge computing device including a processor and a non-transitory memory storing executable instructions that, when executed, cause the processor to generate and output a vehicle behavior score and the vehicle control signal to the vehicle, the vehicle control signal configured to adjust operation of the vehicle system in response to the vehicle behavior score being less than a minimum vehicle behavior score threshold. In a first example of the system, the system further comprises: at least one of: a road user with a user device that is configured to capture road user data and is communicably coupled to the edge computing device, a road infrastructure device configured as and/or including one or more sensors configured to capture road infrastructure data, the road infrastructure device communicably coupled to the edge computing device, and a remote vehicle including sensors configured to capture remote vehicle data, the remote vehicle communicably coupled to the edge computing device. In a second example of the system, optionally including the first example, the edge computing device is further configured to: receive vehicle data from the vehicle, receive remote vehicle data from the remote vehicle, receive road user data from the road user, receive road infrastructure data from the road infrastructure device, and generate the vehicle behavior score of the vehicle using the vehicle data and one or more of the road user data, road infrastructure data, and remote vehicle data. In a third example of the system, optionally including one or both of the first and second examples, the edge computing device is further configured to output the vehicle control signal to at least one of the remote vehicle and the road user. In a fourth example of the system, optionally including one or more or each of the first through third examples, the edge computing device is further configured to output the vehicle behavior score to a system communicably coupled to the vehicle.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, et cetera. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and preceded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," et cetera are used merely as labels, and are not intended to impose numerical requirements or a particular positional order on their objects. The following claims particularly point out subject matter from the above disclosure that is regarded as novel and non-obvious.

## Claims

1. A method for an edge computing device, comprising:
receiving, at an edge computing device, vehicle data from a vehicle via a communication link between the vehicle and the edge computing device;
receiving, at the edge computing device, remote vehicle data from a remote vehicle via a communication link between the remote vehicle and the edge computing device;
receiving, at the edge computing device, road user data from a road user via a communication link between the road user and the edge computing device;
receiving, at the edge computing device, road infrastructure data from a road infrastructure device via a communication link between the road infrastructure device and the edge computing device;
executing instructions stored in a non-transitory memory of the edge computing device via a processor of the edge computing device to calculate a vehicle behavior score of the vehicle using vehicle data and one or more of remote vehicle data, road user data, and road infrastructure data; and
outputting and storing the vehicle behavior score.

2. The method of claim 1, wherein calculating the vehicle behavior score comprises identifying vehicle events of vehicle interaction with each of the remote vehicle, the road user, and the road infrastructure device using vehicle data and remote vehicle data, road user data, and road infrastructure data, respectively.

3. The method of claim 2, further comprising applying a weight to each vehicle event, and calculating a sum of weighted vehicle events to identify a driving score for interactions of the vehicle with each of the remote vehicle, the road user, and the road infrastructure device.

4. The method of claim 3, wherein calculating the vehicle behavior score comprises:
calculating a weighted sum of the driving score for vehicle-remote vehicle interaction, the driving score for vehicle-road user interaction, the driving score for vehicle-road infrastructure device interaction, and the driving score for the vehicle.

5. The method of claim 4, wherein calculating the vehicle behavior score further comprises calculating the weighted sum of traffic violations and alerts of the vehicle.

6. The method of claim 4 or 5, further comprising comparing the vehicle behavior score to a minimum vehicle score threshold and, in response to the vehicle behavior score being less than the minimum vehicle score threshold, identifying one or more driving scores that are less than a corresponding minimum threshold driving score.

7. The method of claim 6, further comprising generating and outputting one or more control signals that correspond to a driving scored identified as being less than the corresponding minimum threshold driving score.

8. The method of claim 7, wherein the vehicle is configured to adjust operation of the vehicle in response to receiving a control signal.

9. The method of any preceding claim, wherein the vehicle behavior score is calculated in response to determination that a trip of the vehicle has ended.

10. The method of any preceding claim, wherein the vehicle behavior score is output and stored in association with an identity of an operator of the vehicle as an operator behavior score.

11. The method of any preceding claim, further comprising:
identifying anomalies in at least one of the vehicle data, remote vehicle data, road user data, and road infrastructure data; and
correcting identified anomalies prior to calculating the vehicle behavior score.

12. A system, comprising:
a vehicle having a sensor subsystem configured to capture information about a vehicle behavior and/or an operator behavior, the vehicle further configured to adjust operation of a vehicle system in response to receiving a vehicle control signal; and
an edge computing device communicably coupled to the vehicle, the edge computing device including a processor and a non-transitory memory storing executable instructions that, when executed, cause the processor to generate and output a vehicle behavior score and the vehicle control signal to the vehicle, the vehicle control signal configured to adjust operation of the vehicle system in response to the vehicle behavior score being less than a minimum vehicle behavior score threshold.

13. The system of claim 12, further comprising at least one of:
a road user with a user device that is configured to capture road user data and is communicably coupled to the edge computing device;
a road infrastructure device configured as and/or including one or more sensors configured to capture road infrastructure data, the road infrastructure device communicably coupled to the edge computing device; and
a remote vehicle including sensors configured to capture remote vehicle data, the remote vehicle communicably coupled to the edge computing device.

14. The system of claim 13, wherein the edge computing device is further configured to:
receive vehicle data from the vehicle;
receive remote vehicle data from the remote vehicle;
receive road user data from the road user;
receive road infrastructure data from the road infrastructure device; and
generate the vehicle behavior score of the vehicle using the vehicle data and one or more of the road user data, road infrastructure data, and remote vehicle data.

15. The system of claim 13 or 14, wherein the edge computing device is further configured to output the vehicle control signal to at least one of the remote vehicle and the road user.
